**Europäisches Patentamt**

**European Patent Office**

**Office européen des brevets**

(19)

(11) **EP 1 548 490 A2**

(12) **EUROPEAN PATENT APPLICATION**

(43) Date of publication:
29.06.2005   Bulletin 2005/26

(51) Int Cl.$^7$: **G02F 1/01**, G05B 23/02

(21) Application number: 04258110.8

(22) Date of filing: 23.12.2004

(84) Designated Contracting States:
**AT BE BG CH CY CZ DE DK EE ES FI FR GB GR HU IE IS IT LI LT LU MC NL PL PT RO SE SI SK TR**
Designated Extension States:
**AL BA HR LV MK YU**

(30) Priority: 24.12.2003 US 744016

(71) Applicant: **Lynx Photonic Networks Inc.**
**Calabasas Hills, California 91301 (US)**

(72) Inventors:
• **Kopelovitz, Beni**
**Kfar Saba 44378 (IS)**
• **Levi, Gil**
**45870 (IS)**

• **Harris, Bernard**
**Tel Aviv 62157 (IL)**
• **Wende, David**
**Rehovot 76100 (IL)**
• **Rappaport, Elchanan**
**Modiin 71935 (IL)**
• **Berdugo, Y gal**
**Givat Zeev 90917 (IL)**

(74) Representative: **Murgatroyd, Susan Elizabeth**
**Baron & Warren,**
**19 South End**
**Kensington, London W8 5BU (GB)**

Remarks:
The application is published incomplete as filed
(Article 93 (2) EPC).

(54) **System and method for optical switch status monitoring**

(57)     A system and method for monitoring the status of an optical switch that includes at least one electrically addressable element ($H_1$-$H_n$) operative to provide the switching action. The system (200) comprises an electrical monitoring circuit (204) operative to periodically test each such electrically addressable element ($H_1$-$H_n$) while the switch is set to an ON, OFF or intermediate switching configuration, and a mechanism (212) for effecting the periodic testing. The effecting mechanism (212) may be for example a pulse width modulation algorithm. Optical monitoring that taps input and output optical fibers and checks pigtails may be added optionally to the electrical monitoring.

FIG. 2

FIG. 3

**Description**

The present invention relates to optical or photonic switches, and in particular to the monitoring, preferably in real time, of the status of optical switches that include an electronic element that controls the switching actions. Such optical switches include, but are not limited to, a Mach Zehnder Interferometer (MZI) structure in which one or more heating elements are employed to affect the refractive characteristics of a waveguide, thereby enabling redirection of light passing through the optical or photonic switch.

A network of such switches may be used to route an optical stream from a source to a destination on the network. It is imperative that each switch function properly, i.e. all its paths are in working order, and to facilitate this it is desirable to monitor all the switches (preferably in real time). The use of optical switches is well known in the communication arts. Network monitoring is also well known in the networking arts, and the use of MZI switches is also well established.

Known methods for monitoring the status of an optical switch are based on optical techniques. For example, US Patent No. 6,198,856 to Schroeder et al. shows an optical switch having test ports. In this teaching it is pointed out that not all optical switches are compatible with test or monitoring equipment, e.g. the switch presented in US Patent 5,699,462. In '856, Schroeder discloses a variation of the switch having modifications specific to supporting a monitoring function.

US Patent No. 6,317,526 to Shirasaki et al. shows a specific example of a photonic switch employing an MZI configuration that incorporates heating elements and monitoring elements. Two methods for monitoring the heating elements are described. US Patent No. 6,470,106 issued to McClelland et al. shows a "bubble" based optical switch incorporating a failure monitor. US Patent No. 6,636,668 issued to Al-Hemyari et al. teaches an optical means of monitoring optical switches in real time.

All prior art monitoring systems and methods mentioned are exclusively optical. None of the methods described enables monitoring of a switch path which is not currently passing light, i.e. one of the possible paths of a switch not passing light while the monitoring takes place. There is thus a widely recognized need for, and it would be highly advantageous to have, a monitoring method that can check continuously, preferably in real time, the status of any switch path, regardless of whether it is passing light or not at the time of the monitoring. Such monitoring will provide a complete status report of the entire optical system.

The present invention provides a circuit that is used to monitor, in real time, electrically addressable elements embedded in optical switches, particularly heaters embedded in thermo-optical switches. Monitoring of such elements facilitates the early detection of the failure of each such element, and thereby the failure of the switch as a whole. While the following description deals in detail with thermo-optical switches, the circuit, system and method disclosed herein can be implemented in all switch types that use an electronic control method for triggering the optical switching.

According to the present invention there is provided a system for monitoring the status of an optical switch that includes at least one electrically addressable element operative to provide the switching action, the system comprising an electrical monitoring circuit operative to periodically test the at least one electrically addressable element while the switch is set to a switching configuration, and a mechanism for effecting the periodic testing.

According to the present invention there is provided a system for monitoring a non-active optical switch path having at least one electrically addressable element, comprising a first mechanism for electrically testing the at least one electrically addressable element, and a second mechanism for obtaining a switch status based on the electrical testing, whereby the electrical testing is done periodically without affecting any regular function of the at least one electrically addressable element, and whereby the periodic testing provides a complete status report of the switch.

According to the present invention there is provided a method for monitoring the status of an optical switch that has at least one electrically addressable element, comprising the steps of periodically addressing the at least one electrically addressable element to obtain periodic output signals while the switch is in a switching configuration, and processing the output signals, thereby obtaining continuous, real-time information of the status of the optical switch.

According to the present invention there is provided a method for providing complete, real-time status information on an optical communications system that includes a plurality of switches, each switch having at least one electrically addressable element, and a plurality of optical components, the method comprising the steps of electrically monitoring each optical switch through its at least one electrically addressable element, and optically monitoring one or more of the optical components, whereby the combined electrical and optical monitoring provides complete status information on the entire optical communications system.

The invention is herein described, by way of example only, with reference to the accompanying drawings, wherein:

FIG. 1 illustrates the operation of a Mach Zehnder Interferometer (MZI) optical switch;
FIG. 2 is a schematic description of an optical switch monitoring system according to the present invention;
FIG. 3 shows in detail a preferred embodiment of a monitoring circuit according to the present invention;

FIG. 4 shows an exemplary application of PWM testing;

FIG. 5 shows an NxN optical chip with 2N input/output fibers, configured to test optically each fiber.

FIG. 6 shows an NxN optical chip with a pigtail and 2N input/output fibers, configured to test optically the pigtail.

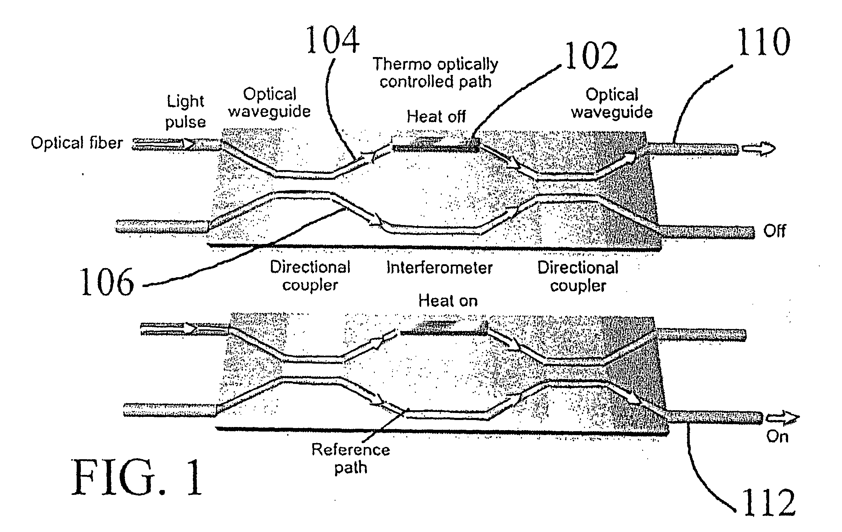

The present invention provides a monitoring circuit that is used to monitor electrically addressable elements embedded in optical switches. These elements are responsible for the optical switching action, for example through the electro-optic, thermo-optical effect or a mechanical actuation effect. The monitoring is based on electrical signals passed through an electrically addressable element such as a heater that is integral to the switch, the signal response monitored and evaluated. In other words, in contrast with prior art, the monitoring system and method disclosed herein provide electrical monitoring of the status of an optical switch. Furthermore, the method disclosed herein differs from prior art methods in that it monitors the actual switching mechanism, and not only the switching command and its processing, or the current switch position. The method also monitors all independent switching elements, verifying that they operate in all their positions needed to operate the optical switch system. The description focuses on a particular type of optical switch - the thermo-optical MZI type switch, shown schematically in FIG. 1, which is well known in the art. However, the present invention is not meant to be limited to MZI switches, and is equally applicable to other types of optical switches, provided they include such an electrically addressable element. Thus, MEMS micro-mirror switches and movable waveguide optical switches that are actuated mechanically in response to electrical field or current impulses also fall within the scope of the present invention.

Optionally, in addition to the electrical monitoring mechanism of switches, switch parts, switch arrays, etc., the present invention also provides optical monitoring of the light paths that complements in certain cases the electrical monitoring, to provide a complete monitoring system at the level of both optical chip and optical switching system. One optical monitoring mechanism involves taps and photodetectors for tapping into, and detecting an optical signal present in the fibers, or in other words, external monitoring of the light signals. Another optical monitoring mechanism involves a laser (or any other light source with a light characteristics range available and supported in the system) providing a signal that monitors a pigtail connection. This mechanism monitors all pigtails of the optical switch by passing light through additionally added or already present unused fibers to make sure that a pigtail is not disconnected or degraded. This is done by making sure that each pigtail connected to the optical switch, which can have multiple fibers in an array, passes the light from the laser used into the switch and back out to a photodetector making sure the pigtail is secured properly to the optical switch and is passively passing the light from all fibers in the pigtail, not just the ones used for the monitoring. Both these methods are optionally added to the electrical monitoring to provide a complete monitoring solution.

The present invention provides an inventive monitoring circuit, system and method that can monitor every part of an optical switch at all times, thus providing an extremely reliable (system-wise) switch, which can be used for high availability demanding applications, for example for protection switching applications. As with other monitoring methods, the monitoring or testing method disclosed herein can monitor the light coming into all ports and going out of all ports of a switch or of a switch array ("chip"), making sure that the present configuration of a tested switch is working and is within required parameters. This is simply done by tapping into the input and output fibers and measuring the signals that are present, making sure that the effect the switch has on these signals is the desired one. However, in contrast with known optical monitoring methods, the method disclosed herein can go beyond such simple "active" monitoring, and can monitor the (theoretical) configurations *not used at present* but potentially used in the future. In other words, the monitoring of the present invention ensures that a light path is operational at all times, even if that path is not in use (not passing light at present). The present monitoring can thus be applied to a "non-active" switch, switching configuration or light path, as well as to a switch in an intermediate position between ON and OFF configuration. A "non-active" switch as used herein means a switch that does not pass light through a certain path or paths of that switch when tested. Known monitoring systems and methods, which are exclusively optical, monitor only "active" switches, configurations or light paths, i.e. only switches that pass light at the time of the monitoring.

As mentioned, the optical switches which can be monitored using this present invention include regular ON/ OFF (binary) switches as well as "intemiediate" switches, i.e. switches that not only pass the entire light signal to one port or another, but can multicast the signal between different ports at different weighted ratios. This means for example that in an 8X8 switch system in which there are 8 inputs and 8 outputs, input 3 may be switched to outputs 2, 5, 6 and 7 at 30%, 25%, 15%, 30% power respectively. In another example of thermo-optical switches based on MZI, the control of such switches can be done by applying an electrical power level somewhere between the ON level and the OFF level of the switching element in the optical switch, according to the desired ratio of the optical power split needed by the MZI being controlled. The present invention can also monitor the status of all such possible configurations, ensuring that they are functioning appropriately both in the present configuration and in future configurations to be switched by the optical switch. In addition the present invention also includes status monitoring of variable optical attenuators (VOA), which may be basically implemented using a multicast 1X2 switch having one input and two outputs, where the second output is either disregarded or discarded. The signal from input 1 to output 1 ($1 \rightarrow 1$) is attenuated by transferring some part of the optical power to output 2 (1→2) according to the desired ratio. This is done, for example in thermo-optical MZI switches controlled by PWM, by setting the PWM duty cycle, or in other words the heating delivered by the heater to the optical chip on one of the arms of the MZI to an intermediate level between that of an ON level and that of an OFF level, according to the desired attenuation.

In a particular example, the monitoring system and method of the present invention is applied to a 1x2 switch passing light in a 1→1 configuration. The present monitoring can ensure that the 1→2 path will be operational when we want to reroute the light, while the switch is still in the 1→1 configuration, without light actually passing through the 1→2 configuration.

Referring now to the figures, FIG. 1 shows a typical MZI switch that includes a heater **102** located substantially on or near a first arm (optical waveguide) **104**, which is typically identical with, but may also be different from a second arm **106**. Temperature changes in the heater change an optical property (i.e. refraction index) of arm **104** through the thermo-optical effect, thereby changing the phase of light propagating through the arm. The phase difference between the two arms determines whether light is directed to a first output **110** or to as second output **112**. The heater is connected through a heater circuit to a power source and to a control mechanism (not shown in FIG. 1). A typical switching action is described in detail in prior art, including in Shirasaki '526 above and in U.S. Patent No. 6,643,422 to Katagiri et al, and will not be repeated here. MZI switches with heaters on both arms are also known, e.g. as disclosed in M. Kawachi, "Silica waveguides on silicon and their application to integrated-optic components", Optical and Quantum Electronics, 417-426, 1990, and in US Patent Application No. 10/140,987 to Shani et al. The discussion follows with reference to switches incorporating one heater, with the understanding that the monitoring system and method disclosed herein can be used to monitor independently each and every heater in a switch or switch array.

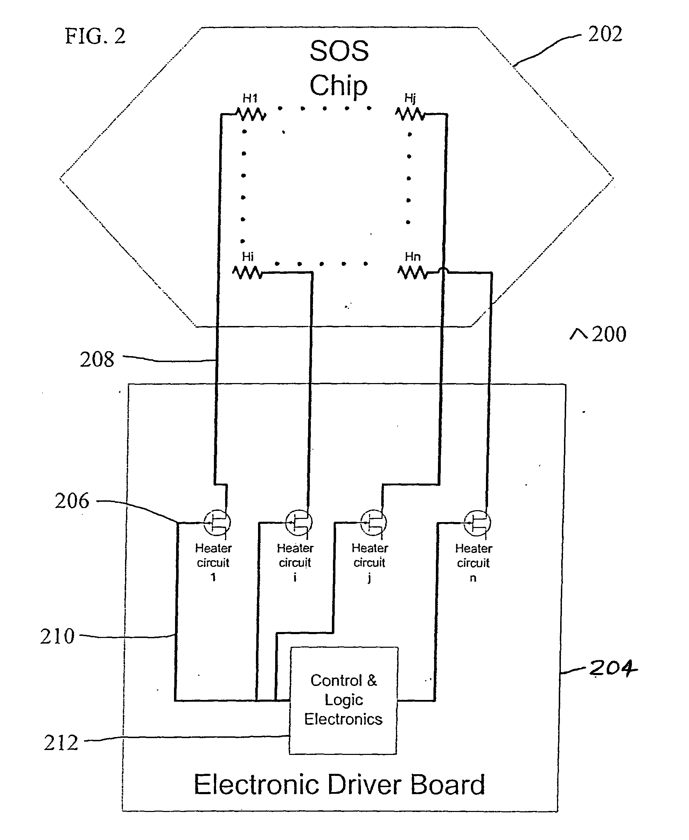

FIG. 2 is a schematic description of a monitoring system **200** according to the present invention. The system is used to monitor the status of a plurality "n" of heaters $H_1$-$H_n$ located here on a Planar Lightwave Circuit (PLC) chip **202**. Each heater belongs to a separate optical switch, for example a MZI switch. Alternatively, as mentioned, an MZI switch may have two or more heaters, while other type of switches, e.g. MEMS optical switches, may have a plurality of electronic elements used not only (or even at all) for changing an optical property but also for actuating or driving the switch. Any such electronic element that passes an electrical current may in principle be used for electronic or electrical monitoring of the optical switch, as described herein. It is important to emphasize that this monitoring does not interfere in any way with the optical signal passing through the switch. System **200** comprises an electronic driver board **204** that includes the driving and control functions for switches **H**. Specifically, board **204** comprises, for each heater, a heater circuit **206** connected through a first connection **208** to the heater, and through a second connection **210** to a Control and Logic Electronics module **212**. Module **212** is preferably common to all heater circuits.

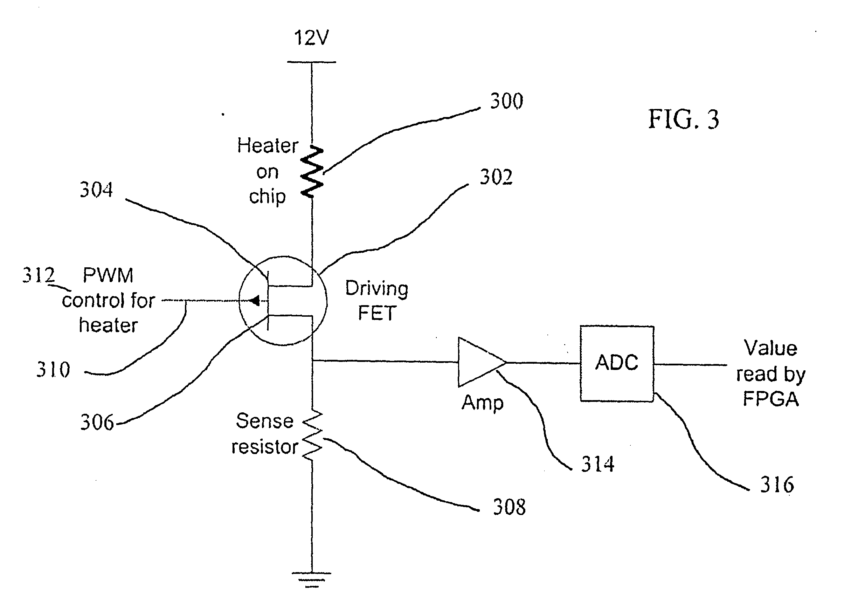

FIG. 3 shows in detail an exemplary embodiment of a heater circuit **206** used to drive and monitor a heater **300** (same as $H_{n-1}$ above). The circuit preferably comprises a driving field effect transistor (FET) **302,** connected with a first terminal (e.g. drain) **304** to the heater and through it to a voltage (preferably 12V) source, and with a second terminal (e.g. source) **306** to a sense resistor **308** and through it to ground. A gate **310** of the FET is connected to a pulse width modulation (PWM) control **312**, which function is described in more detail below. Second terminal **306** and sense resistor **308** are commonly connected through an amplifier **314** to an Analog to Digital converter (ADC) **316**. An output signal obtained from the sense resistor is amplified in the amplifier and conditioned by the ADC, after which it is read by a reading mechanism, preferably an FPGA, which is used for the logic control of the optical switch.

In operation, module **212** receives a command to set the optical switch to a chosen configuration, and translates the request to a set of control PWM values to each heater. PWM systems and methods are known. For a recent reference, see for example US Patent No. 6,647,318 to Salsbury. The module then sends the PWM command to the gates of the driving FETs. Each PWM command opens the gate for a specific time slice (out of the control cycle of the heaters), essentially passing a 12V current from the "12V" power supply to the appropriate heater/s on the PLC for a specific duty cycle. For example, the 12V connection is "HI" x% of the time, while it is LOW (disconnected from the heater) (100-x)% of the time, thus achieving a certain heating differential between the two MZI paths. The switch thereby executes the requested configuration until a new PWM command is received.

The monitoring and sensing of the operational status of the optical switch is done through the monitoring of the status of each heater. The heater is the only active component in the optical switch, and if the heater is functioning properly and has a closed circuit it will generate the required heat, which will perform the switch operation due to the inherent physical characteristics of the material. Therefore, a good heater with a good connection to the driver circuit validates a good optical switching operation. Module **212** does this monitoring and sensing continuously. It reads the ADC at a number of time slots along the PWM cycle, ensuring that the correct value is read by the FPGA, or any other electronic device that can determine and report the status from the ADC both when PWM is HI (the FET is passing an electrical current) and when it is LOW (the FET is not passing an electrical current). This makes sure that the FET is in working order, since the ADC reading checks that the FET can be used to both connect and disconnect the electrical current from the heater in the MZI. The module also checks the heater resistance, making sure the heater is able to carry the current needed to drive the optical switch with the required resistance. This check makes sure that the heater has not deteriorated in any manner. The procedure described above essentially operates the entire mechanism needed to drive the optical switch, making sure everything is in working order. Note that this can be done when the switch's monitored path is OFF (no light passing), unlike in any known optical monitoring method and system.

In cases when no PWM is driven to a certain heater (due to the nature of the request sent to the switch control and its translation into PWMs for the "n" MZIs comprising the optical switch) a very short PWM duty cycle is enforced on the unused heaters for a time long enough to measure the ADC readings. This procedure ensures that the circuit is operational, but is not long enough to interfere with the thermo-optical effect of the optical switch. The thermo-optical effect typically requires around lms to cause a switching from ON to OFF, whereas a short PWM duty cycle used to measure the operational status of an unused MZI and its heater according to the present invention will typically require about 1μs (or less) and will therefore not affect the optical signal passing through the switch. The same is true for a circuit in a full duty PWM control at HI. In this case, if applicable, one short burst of LOW control will be forced on the switching mechanism to ensure the capability to shut off the FET running electrical current to the heater, thus ensuring complete functionality. This will also be done for a time short enough not to affect the performance of the optical switch on the optical signal being passed through the switch, but long enough to measure and assure the operational status of the switching mechanism.

**Optional Additional Optical Testing**

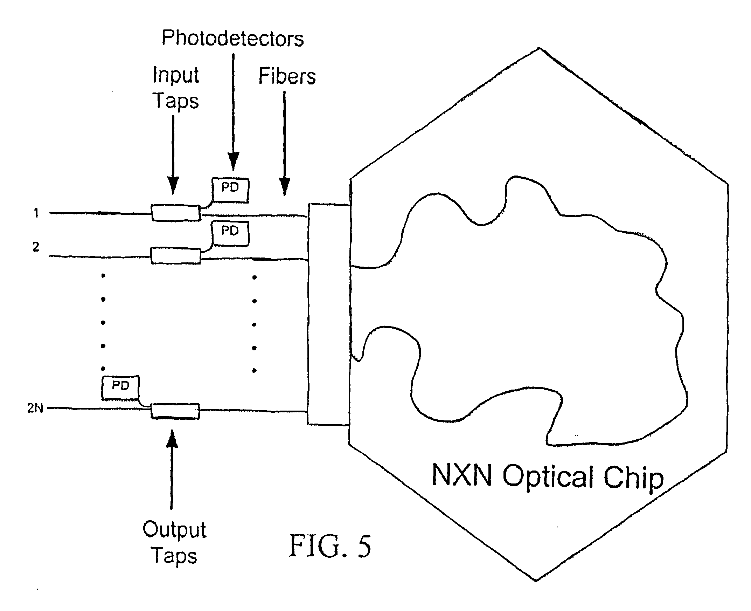

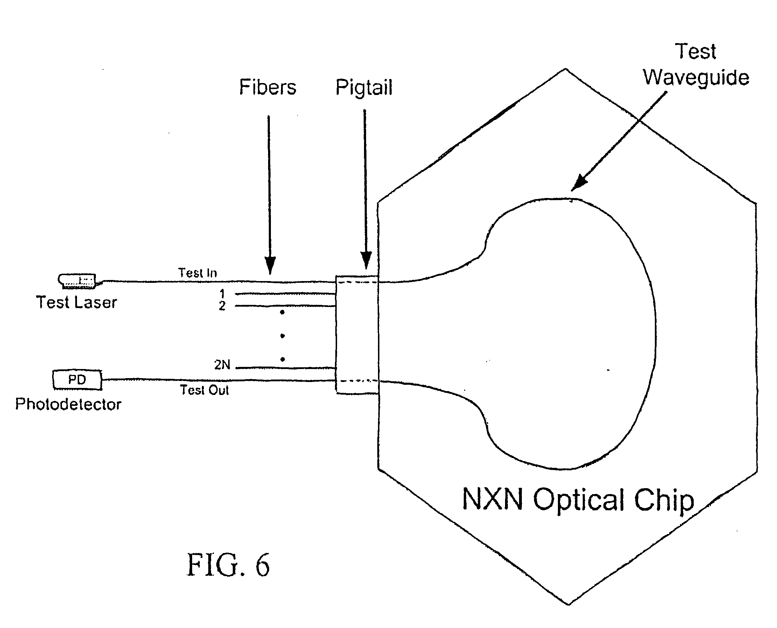

The electrical testing through an electrically addressable element of a switch permits testing of the type that could not be done in prior art, specifically testing of a non-active switch path or paths, i.e. paths not passing light at time of testing or monitoring. Optionally, the testing method disclosed herein may comprise additional optical testing of other components of the optical switch system, such as fibers and pigtails. These are passive components of the optical switch system that need to be monitored as well to ensure the complete functionality status of the optical switch system. FIG. 5 shows an optical chip (switch module) comprising an NxN switch array and 2N fibers, each fiber having attached at an input and/or an output port an output tap connected to a photo-detector (**PD**). FIG. 6 shows a similar optical chip, in which the 2N fibers are connected to the chip through a pigtail. A test waveguide for testing the pigtail is also shown. The pigtail is essentially a waveguide interconnection that connects the internal waveguides of the optical switch module with external waveguides or fibers, which then carry the light outside the optical switch module. The test waveguide has attached thereto on one end a test laser, and on another end a **PD.**

To make sure the working signals are working according to the desired specifications, each fiber in FIG. 5 is tapped at an input/output port. That is, a small amount of light is tapped (taken out) to be monitored. Input fibers are monitored for light going into the switch module, and output fibers are monitored for light coming out of the switch module. In this manner, the exact effect of the optical switch module on the light signals can be checked by comparing the input and output light signal characteristics. Such tapping methods are well known in the art.

In optical switching systems that include pigtails, a final status check that needs to be done on both working and non-working (potentially future working) paths includes checking the pigtail (FIG. 6) and its effect on the signals. Since a pigtail is a passive element in terms of its effect on optical signals, the only way to check its status is by passing light through it, making sure it is still working for the entire fiber array being connected through it. This is preferably done by use of an external (to the optical switch module) "test" laser that passes light through specifically laid out and otherwise unused fibers and waveguides. These waveguides and fibers carry that laser light through the pigtail into the optical switch waveguides and back out the pigtail (or another alternative pigtail) to an external **PD**. The exiting light is measured, making sure the effects on the laser signal characteristics are according to specifications at all times. The pigtail testing is preferably done using the most outlying fibers of the array in the pigtail, since their operational status guarantees the status of the other paths in the pigtail (i.e. the entire array of fibers being connected via the pigtail) in terms of the effect of the pigtail on these paths. All pigtails of the optical switch modules are checked and monitored at all times for correct operational working status.

In summary, the present invention discloses mechanisms and methods of monitoring the status of any optical switch, whether in use or not at the time it is monitored, using electrical means. All switches in a system, MZI switches being just exemplary, can be continuously monitored in real time, making sure they are functional, whether they are currently being used to pass light or whether they are unused at the moment but potentially required in future configurations requested from the optical switch. If an unexpected value is read by the sensing mechanism at any time, an appropriate notification and alarm is sent to the management of the optical switch, thus reporting the operational status of the optical switch to its user at all times.

While the description above refers in detail to MZI switches, the monitoring described is of course general and applicable to *any* type of optical switch. The only requirement is that the optical switch has attached an electrical or electronic element (such as a heater or actuator) that determines a switching configuration or state. For example, in MEMS optical switches, the switching may occur by micromirror movements, see e.g. U.S. Patent No. 6,633,694 to Tew and the references therein, or by waveguide movements, see e.g. U.S. patent No. 6,647,168 to Hsu et al., U.S.

patent No. 6,577,785 to Spahn et al., and PCT application PCT/IL01/00787 to Haronian. The movement results from actuation; normally electrostatic, therefore involving electrical/electronic drivers (e.g. comb drives), which, according to the present invention, represent an electrically addressable element. Tew '694 specifically mentions electrically addressable circuitry associated with his switches. The monitoring method described herein is then applicable to all such switches that incorporate an electrically addressable element by (for example) using PWM or other signals on the electrically addressable circuitry, checking the switch status at all times, whether the switch is in use or not.

**Example for electrical monitoring of an optical switch using PWM sense control**

This example is a case in which an ARM central processor is controlling the entire optical switch, and an FPGA is used to control the PWM generation and monitoring. The example is taken from one already implemented embodiment of the invention. Others embodiments (not shown) have been implemented using a discrete logic circuit, a gate array, a dedicated fully custom chip, a DSP, a microprocessor and other control modules instead of an FPGA.

Sense Function

PWM control is achieved through a Sense Function that has the purpose of providing detection of errors in the heaters. The following describes an exemplary error detection algorithm.

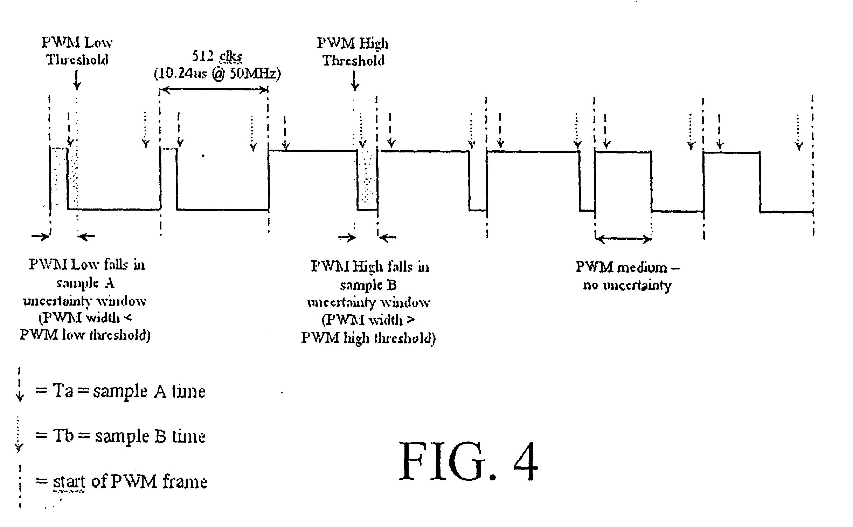

Each PWM FPGA collects data from sensors relating to its drive pulses that pass through A/Ds or any other value comparing or measuring electronic circuit. Referring now to FIG. 4, a PWM is sampled at time A from the rising edge of the PWM pulse (close to the beginning of the pulse), and at time B from the rising edge, close to the end of the PWM pulse (the actual sampling times are programmable in the PWM A/B Sampling Time registers). Taking the known PWM width, the algorithm decides what the value of each sample should be. For example, for a PWM close to 50% duty cycle the first sample should be '1' and the second should be '0'. For a short PWM they may both be '0', and for a long PWM they may both be '1'.

If the PWM is meant to fall within a certain proximity (defined in the PWM Settling Time register) to one of the samples ("uncertainty window" below), the algorithm allows either value of the sample. The uncertainty windows define low and high PWM thresholds (measured in clocks). If a PWM width is shorter than the PWM Low Threshold, the PWM will be known as Lo. If a PWM width is longer than the PWM High Threshold, the PWM will be known as Hi. Otherwise, the PWM will be known as medium (see also the section on PWM Low/High Threshold registers below).

In addition, the algorithm checks the amplitude of the sample. The thresholds defining the expected amplitude of a sample are programmable in registers. Three thresholds are defined:

A sample below $TH_{off}$ is considered to be '0'. A sample between $TH_{on}$ and $TH_{ill}$ is considered to be '1'. A sample between $TH_{off}$ and $TH_{on}$ is considered "mid" and is only legal if the PWM is meant to fall within the uncertainty window. A sample above $TH_{ill}$ always reports an error. The terms ON and OFF refer to logic levels of the FET. Each range includes the upper threshold value but not the lower

$$(i.e.\ TH_{off} < mid <= TH_{on})$$

The table below shows what the expected sampled values are for each type of PWM:

| sample: PWM type: | Expected Sample A | Expected Sample B |
|---|---|---|
| PWM Low | 0 / 1 / mid | 0 |
| PWM Medium | 1 | 0 |
| PWM High | 1 | 0 / 1 / mid |

When a sample is found not to match the expected value, an error is generated for that switch in an Error Bit Register. In addition to the Error Bit Register, each switch will send notification to the managing entity to report the error to a higher level to be dealt with there as needed by the specific application.

All publications, patents and patent applications mentioned in this specification are herein incorporated in their entirety by reference into the specification, to the same extent as if each individual publication, patent or patent application was specifically and individually indicated to be incorporated herein by reference. In addition, citation or identification of any reference in this application shall not be construed as an admission that such reference is available as prior art to the present invention.

While the invention has been described with respect to a limited number of embodiments, it will be appreciated that many variations, modifications and other applications of the invention may be made.


**Claims**

1. A system for monitoring the status of an optical switch that includes at least one electrically addressable element operative to provide the switching action, the system comprising:

   a. an electrical monitoring circuit operative to periodically test electrically the at least one electrically addressable element while the switch is set to a switching configuration; and
   b. a mechanism for effecting said periodic electrical testing, thereby providing a status of the optical switch;

   whereby said periodic electrical testing does not interfere with optical traffic passing through the optical switch.

2. The system of claim 1, wherein said switching configuration is an OFF configuration.

3. The system of claim 1 or 2, wherein said optical switch is selected from the group consisting of thermo-electric optical switches, micro-mirror switches and movable waveguide switches.

4. The system of claim 1, 2 or 3, wherein said at least one electrically addressable element is at least one heating element.

5. The system of claim 4, wherein said switch is a Mach Zehnder Interferometer type switch.

6. The system of any preceding claim, wherein said operativeness of said electrical monitoring circuit to periodically test said at least one electrically addressable element includes an operativeness to perform pulse width modulation (PWM) testing.

7. The system of any preceding claim, further comprising optical monitoring means operative to provide additional optical status information on optical components connected to the optical switch.

8. The system of claim 7, wherein said optical components are input and output optical fibers, and wherein said optical means include means for tapping each said input optical fiber at an input port, and each said output optical fiber at an output port, thereby obtaining input and output light characteristics that can be compared to provide said additional optical status information.

**9.** The system of claim 7 or 8, wherein said optical components include at least one pigtail, and wherein said optical means include means to check said at least one pigtail.

**10.** A system for monitoring a non-active optical switch having at least one electrically addressable element, comprising:

a. a first mechanism for electrically testing the at least one electrically addressable element; and
b. a second mechanism for obtaining a switch status based on said electrical testing,

whereby said electrical testing is done periodically without affecting any regular function of said at least one electrically addressable element, and whereby said periodic testing provides a complete status report for the optical switch.

**11.** The system of claim 10, wherein said first mechanism includes a monitoring circuit connected to said at least one electrically addressable element.

**12.** The system of claim 10 or 11, wherein said second mechanism includes a mechanism for exchanging pulse width modulation (PWM) signals with said at least one electrically addressable element through said monitoring circuit.

**14.** The system of claim 10, 11 or 12, wherein said optical switch is selected from the group consisting of thermo-electric optical switches, micro-mirror switches and movable waveguide switches.

**15.** The system of claim 14, wherein said thermo-electric optical switch is a Mach Zehnder Interferometer type switch having two arms, and wherein said at least one electrically addressable element is at least one heater disposed proximally to one of said arms.

**16.** A method for monitoring the status of an optical switch that has at least one electrically addressable element, comprising the steps of:

a. periodically addressing the at least one electrically addressable element to obtain periodic output signals while the switch is in a switching configuration; and
b. processing said output signals; thereby obtaining continuous, real-time information of the status of the optical switch.

**17.** The method of claim 16, wherein said switching configuration is selected from the group consisting of an ON configuration, an OFF configuration and an intermediate configuration.

**18.** The method of claim 16 or 17, wherein said step of periodically addressing includes periodically addressing said at least one electrically addressable element using pulse width modulation.

**19.** The method of claim 16, 17 or 18, wherein said optical switch is used for multicasting.

**20.** The method of claim 16, 17 or 18, wherein said optical switch is used for variable optical attenuation.

**21.** A method for providing complete, real-time status information on an optical communications system that includes a plurality of switches, each switch having at least one electrically addressable element, and a plurality of optical components, the method comprising the steps of:

a. electrically monitoring each optical switch through said its at least one electrically addressable element; and
b. optically monitoring one or more of the optical components;

whereby the combined electrical and optical monitoring provides complete status information on the entire optical communications system.

**22.** The method of claim 21, wherein said step of electrically monitoring each optical switch includes monitoring said switch by a pulse width modulation sensing algorithm.

**23.** The method of claim 21 or 22, wherein said optical components include at least one input fiber and at least one output fiber having respective input and output ports, and wherein said step of optically monitoring includes tapping light from at least one said input port and at least one said output port, thereby obtaining respective input and output light characteristics, said step of optically monitoring further including comparing said input and output light characteristics.

**24.** The method of claim 21, 22 or 23, wherein said optical components include at least one pigtail, and wherein said step of optically monitoring one or more of the optical components further includes means to check said at least one pigtail.

**25.** The method of claim 21, 22, 23, or 24, wherein at least one of said electrically monitored optical switches is used for multicasting

**26.** The method of claim 21, 22, 23 or 24, wherein at least one of said electrically monitored optical switches is used for variable optical attenuation.

FIG. 1

FIG. 2

12V

Heater
on
chip

300

FIG. 3

304

312 PWM
control for
heater

Driving
FET

302

310

306

Amp

ADC

Value
read by
FPGA

Sense
resistor

308

314

316

EP 1 548 490 A2

FIG. 4

FIG. 5

NXN Optical Chip

Photodetectors

Fibers

Input Taps

Output Taps

PD   PD   PD

1   2   2N

FIG. 6